# EUROPEAN PATENT APPLICATION

(11) **EP 1 628 237 A2**
(43) Date of publication of application: **22.02.2006**
(21) Application number: 05291472.8
(22) Date of filing: 07.07.2005
(51) Int. Cl.: G06F 21/00

(54) **Information processing system, information processing device, and program**

(30) Priority: 13.07.2004 JP 2004206337
(71) Applicant: SONY CORPORATION, Tokyo (JP)
(72) Inventor: Sukigara, Ryu, c/o Sony Corporation, Tokyo (JP); Koresawa, Akio, c/o Sony Corporation, Tokyo (JP); Ohshige, Yoichi, c/o Sony Corporation, Tokyo (JP); Takeda, Takashi , c/o Sony Corporation, Tokyo (JP)
(74) Representative: Thévenet, Jean-Bruno

(57) **Abstract**

In an authentication section (22) of a license server (4), a user using a user terminal (1) is authenticated by using a user ID and a password provided by a user terminal (1₁) for the purpose of user identification. Then, the user terminal (1) 1 is to be authenticated by using an equipment ID issued by the authentication section (22) for the user ID to specify the user terminal (1). In response when the user ID is authenticated, a content system is allowed for viewing contents in a content server (3), for example. The present invention can be applied to any content system which provides contents to the user terminal. With such a configuration, any unauthorized accesses can be prevented from a plurality of equipment units.

## Description

### BACKGROUND OF THE INVENTION

### FIELD OF THE INVENTION

The invention relates to information processing systems, information processing devices, and programs and, more specifically, to an information processing system, an information processing device, and a program those capable of preventing any unauthorized accesses from a plurality of equipment units.

### DESCRIPTION OF THE RELATED ART

For access control from a plurality of terminals, various types of copyright protection systems have been proposed. For example, Patent Document 1 (International Publication WO2002/030054 - brochure) is proposing to limit the number of receivers for receiving signals requiring copyright protection even if an IEEE1394 network or others is connected with a bridge.

Equipment units other than personal computers (hereinafter, referred to as PCs), i.e., hard disk recorders or others, can be assigned with each different equipment ID (identification) for unit (equipment) identification (distinction) at the time of shipment, for example. Such equipment IDs serve to restrict the number of equipment units for copying contents requiring copyright protection, or those for reproducing the contents.

### SUMMARY OF THE INVENTION

The issue here is the difficulty of assigning such equipment IDs to the PCs for unit (equipment) identification due to their established standardization.

To be more specific, exemplified here is a case where a user A goes through a billing process with respect to a server that offers movie contents and music contents. The user A uses his or her user ID and password for user identification. Through such a billing process, the user A acquires a license for viewing a movie content with a PC of PC-A. The problem in this case is that the PC-A is assigned with no ID for unit identification.

It means that the user A can view the movie content with another PC of PC-B by using his or her user ID and password. Worse still, if the user ID and password of the user A are leaked to the outside by wiretapping or others, his or her user ID and password become accessible with other PCs by malicious third parties. As such, there has been a problem that the movie content purchased by the user A for viewing becomes available to others.

The invention is proposed in view of such circumstances, and it is considered desirable to prevent any unauthorized accesses from a plurality of equipment units.

In an information processing system according to an embodiment of the invention, a first information processing device includes: a user ID authentication section for authenticating information of a user ID (identification) coming from a second information processing device for user identification, and transmitting to the second information processing device a user authentication certification for the user ID; a first equipment ID determination section for determining whether there is information of an equipment ID corresponding to the user ID authenticated by the user ID authentication section for identifying the second information processing device; an equipment ID issue section for issuing, when the first equipment ID determination section determines that there is no such equipment ID corresponding to the user ID, the equipment ID corresponding to the user ID with respect to the second information processing device; a second equipment ID determination section for determining, in response when the user ID is authenticated by the user ID authentication section, whether the equipment ID issued to the second information processing device and provided therefrom is the same as the equipment ID for the user ID; and an equipment authentication section for authenticating the equipment ID of the second information processing device when the second equipment ID determination section determines that the equipment ID of the second information processing device is the same as the equipment ID for the user ID. The second information processing device includes: a user ID transmission section for transmitting the user ID to the first information processing device; an equipment ID recording section for recording the equipment ID issued by the equipment ID issue section for the user ID and provided by the first information processing device; an equipment ID acquisition section for acquiring, when the user authentication certification coming from the user ID transmission section for the user ID is received, the equipment ID recorded by the equipment ID recording section for the user ID; and an equipment ID transmission section for transmitting, when the equipment ID acquisition section acquires the equipment ID for the user ID, the equipment ID corresponding to the user ID to the first information processing device as the equipment ID of the second information processing device.

A first information processing device according to an embodiment of the invention includes: a user ID authentication section for authenticating information of a user ID (identification) coming from the other information processing device for user identification, and transmitting a user authentication certification for the user ID; a first equipment ID determination section for determining whether there is information of an equipment ID corresponding to the user ID authenticated by the user ID authentication section for identifying the other information processing device; an equipment ID issue section for issuing, when the first equipment ID determination section determines that there is no such equipment ID corresponding to the user ID, the equipment ID corresponding to the user ID with respect to the other information processing device; a second equipment ID determination section for determining, in response when the user ID is authenticated by the user ID authentication section, whether the equipment ID issued to the other information processing device and provided therefrom is the same as the equipment ID for the user ID; and an equipment authentication section for authenticating the equipment ID of the other information processing device when the second equipment ID determination section determines that the equipment ID of the other information processing device is the same as the equipment ID for the user ID.

In response when the user ID is authenticated by the user ID authentication section, when a request comes from the other information processing device for the information of the equipment ID that identifies the other information processing device, the first equipment ID determination section may make a determination whether there is the equipment ID corresponding to the user ID that is authenticated by the user ID authentication section.

The information processing device according to the embodiment of the invention may also include: a time enter section for entering, when the equipment authentication section authenticates the equipment ID of the other information processing device, a predetermined time as a last access time to correspond to the user ID; a time information transmission section for transmitting, to the other information processing device, the last access time entered by the time enter section together with the authentication certification for the equipment ID issued by the equipment authentication section; a time reception section for receiving, from the other information processing device, the equipment ID of the other information processing device and the last access time in response when the user ID is authenticated by the user ID authentication section; and a time determination section for determining, when the second equipment ID determination section determines that the equipment ID of the other information processing device is the same as the equipment ID for the user ID, whether the last access time received by the time reception section is the same as the last access time entered by the time enter section. When the time determination section determines that the last access time received by the time reception section is the same as the last access time entered by the time enter section, the equipment authentication section authenticates the equipment ID of the other information processing device.

A first program according to an embodiment of the invention includes: a user ID authentication step of authenticating information of a user ID (identification) coming from an information processing device for user identification, and transmitting a user authentication certification for the user ID; a first equipment ID determination step of determining whether there is information of an equipment ID corresponding to the user ID authenticated by the user ID authentication step for identifying the information processing device; an equipment ID issue step of issuing, when no such equipment ID corresponding to the user ID is determined as entered by the process of the first equipment ID determination step, the equipment ID corresponding to the user ID with respect to the information processing device; a second equipment ID determination step of determining, in response when the user ID is authenticated by the process of the user ID authentication step, whether the equipment ID of the information processing device provided therefrom is the same as the equipment ID corresponding to the user ID; and an equipment authentication step of authenticating the equipment ID of the information processing device when the equipment ID of the information processing device is determined as being the same as the equipment ID for the user ID by the process of the second equipment ID determination step.

A second information processing device according to an embodiment of the invention includes: a user ID transmission section for transmitting information of a user ID (identification) to the other information processing device for user identification; an equipment ID recording section for recording, as an equipment ID corresponding to the user ID, information of an equipment ID provided in response to the user ID authenticated by the other information processing device for identifying the information processing device; an equipment ID acquisition section for acquiring, when a user authentication certification coming from the other information processing device for the user ID provided by the user ID transmission section is received, the equipment ID recorded by the equipment ID recording section for the user ID; and an equipment ID transmission section for transmitting, when the equipment ID corresponding to the user ID is acquired by the equipment ID acquisition section, the equipment ID corresponding to the user ID to the other information processing device.

When the equipment ID acquisition section does not acquire the equipment ID of the information processing device for the user ID, an equipment ID request section may be further included to make a request to the other information processing device for the equipment ID corresponding to the user ID.

The equipment ID recording section may include an encryption section for encrypting the equipment ID corresponding to the user ID, and record the equipment ID encrypted by the encryption section for the user ID.

The encryption section may encrypt the equipment ID corresponding to the user ID using an encryption key of an ID which uniquely specifies a block configuring the information processing device.

The equipment ID recording section may include a separation section for separately distributing the equipment ID corresponding to the user ID, and record the resulting equipment IDs separately distributed by the separation section to each different region of a recording medium.

The second information processing device according to the embodiment of the invention may further include a time information reception section for receiving a predetermined time that is entered as a last access time corresponding to an authentication certification provided by the other information processing device for the equipment ID corresponding to the user ID provided by the equipment ID transmission section, and the user ID when the equipment ID is authenticated by the other information processing device for the user ID. When the equipment ID corresponding to the user ID is acquired by the equipment ID acquisition section, the equipment ID transmission section may transmit to the other information processing device also the predetermined time received by the time information reception section in addition to the equipment ID corresponding to the user ID.

A second program according to an embodiment of the invention includes: a user ID transmission step of transmitting to an information processing device a user ID (identification) for user identification; an equipment ID recording step of recording, as an equipment ID corresponding to the user ID, information of an equipment ID of the information processing device provided in response to the user ID authenticated by the information processing device for identification; an equipment ID acquisition step of acquiring, when a user authentication certification is received for the user ID provided by the process of the user ID transmission step from the information processing device, the equipment ID corresponding to the user ID recorded by the process of the equipment ID recording step; and an equipment ID transmission step of transmitting, when the equipment ID corresponding to the user ID is acquired by the process of the equipment ID acquisition step, the equipment ID corresponding to the user ID to the information processing device.

In a first aspect of the invention, the first information processing device authenticates information of a user ID (identification) coming from the second information processing device for user identification. The second information processing device is provided with a user authentication certification for the user ID, and a determination is then made whether there is information of an equipment ID corresponding to the authenticated user ID for identifying the second information processing device. When it is determined that there is no such equipment ID corresponding to the user ID, an equipment ID is issued to the second information processing device for the user ID. In response when the user ID is authenticated, another determination is made whether or not the equipment ID of the second information processing device coming therefrom is the same as the equipment ID for the user ID. When it is determined that the equipment ID of the second information processing device is the same as the equipment ID for the user ID, the equipment ID of the second information processing device is authenticated. As to the second information processing device, when the user ID is forwarded to the first information processing device, when the equipment ID is recorded for the issued user ID provided by the first information processing device, and when the user authentication certification is received for the provided user ID, the equipment ID corresponding to the recorded user ID is acquired. After the equipment ID corresponding to the user ID is acquired, the equipment ID for the user ID is forwarded to the first information processing device as the equipment ID of the second information processing device.

In a second aspect of the invention, information of a user ID (identification) coming from the information processing device is authenticated for user identification. A user authentication certification for the user ID is then transmitted, and a determination is made whether there is information of an equipment ID corresponding to the authenticated user ID for specifying the information processing device. When it is determined that there is no such equipment ID corresponding to the user ID, the equipment ID corresponding to the user ID is issued with respect to the information processing device. Another determination is also made whether the equipment ID of the information processing device coming therefrom in response when the user ID is authenticated is the same as the equipment ID for the user ID. When it is determined that the equipment ID of the information processing device is the same as the equipment ID for the user ID, the equipment ID of the information processing device is authenticated.

In a third aspect of the invention, information of a user ID (identification) is transmitted to the information processing device for user identification. In response to the user ID authenticated by the information processing device, information of an equipment ID of the information processing device for identification is recorded as an equipment ID for the user ID. When a user authentication certification for the user ID comes from the information processing device, the equipment ID corresponding to the recorded user ID is acquired. When the equipment ID corresponding to the user ID is acquired, the equipment ID for the user ID is forwarded to the information processing device.

A network denotes a mechanism in which at least two equipment units are connected to enable information transmission from one equipment unit to the other. The equipment units communicating with each other over such a network may be each separately provided, or may both be an internal block configuring the same equipment unit.

Moreover, communications surely includes radio communications and cable communications, or may be a combination of radio communications and cable communications, i.e., radio communications for a specific section, and cable communications for any other sections. Alternatively, cable communications may be carried out from a specific equipment unit to the other, and radio communications for the reverse direction.

According to the invention, any unauthorized accesses can be prevented from a plurality of equipment units, the copyright protection can be promoted with ease, and information leakage can be successfully prevented.

### BRIEF DESCRIPTION OF THE DRAWINGS

FIG. 1 is a diagram showing an exemplary configuration of a content system of an embodiment of the invention;
FIG. 2 is a block diagram showing an exemplary configuration of a user terminal of FIG. 1;
FIG. 3 is a block diagram showing an exemplary function configuration of the user terminal of FIG. 2;
FIG. 4 is a diagram showing in detail an exemplary function configuration of the user terminal of FIG. 3;
FIG. 5 is a diagram showing in detail an exemplary function configuration of an authentication section of a license server of FIG. 1;
FIG. 6 is a diagram showing an exemplary configuration of data for storage into a user equipment database of FIG. 5;
FIG. 7 is a flowchart illustrating an authentication process to be executed by the user terminal of FIG. 1;
FIG. 8 is a flowchart illustrating an authentication process to be executed by the license server of FIG. 1;
FIG. 9 is a flowchart illustrating an equipment ID issue process in step S54 of FIG. 8; and
FIG. 10 is a flowchart illustrating an equipment ID authentication process in step S56 of FIG. 8.

### DESCRIPTION OF THE PREFERRED EMBODIMENT

Prior to describing an embodiment of the invention, exemplified below is a correlation among claimed components and specific examples in the embodiment. This is aimed to prove that specific examples provided for the purpose of supporting the description of claims are described in the embodiment of the invention. Therefore, even if there are any specific examples not found here for the components described in the embodiment of the invention, it does not mean that the specific examples are not correlated to the components. On the other hand, even if there are specific examples found here for the components, it does not mean that the specific examples are not correlated to components except for the components.

Moreover, the description herein does not mean that aspects corresponding to the specific examples found in the embodiment of the invention are completely claimed. In other words, this description is not denying the presence of aspects not claimed but corresponding to the specific examples found in the embodiment of the invention, i.e., the presence of inventions for future divisional application or amendment addition.

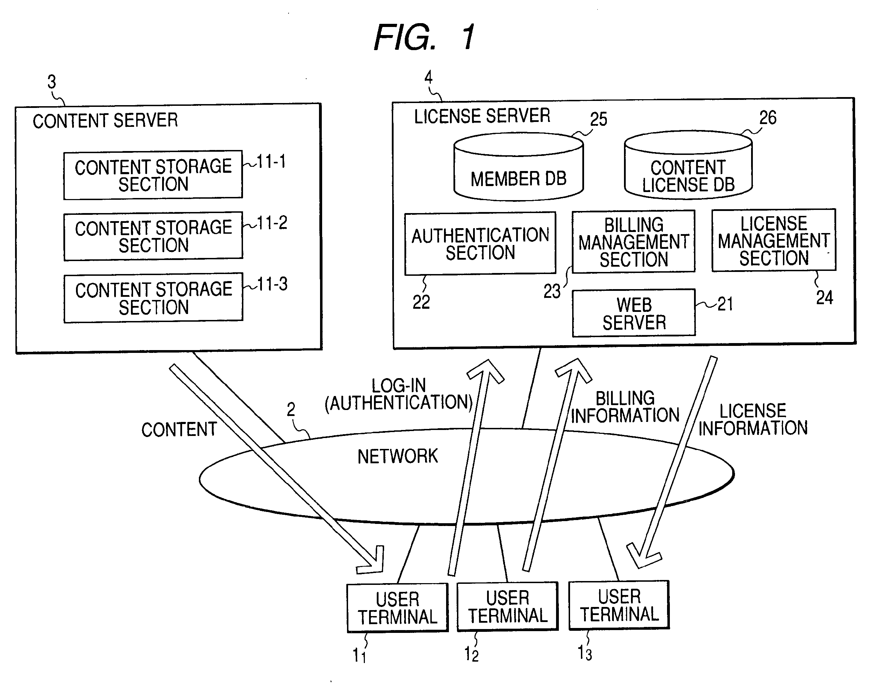

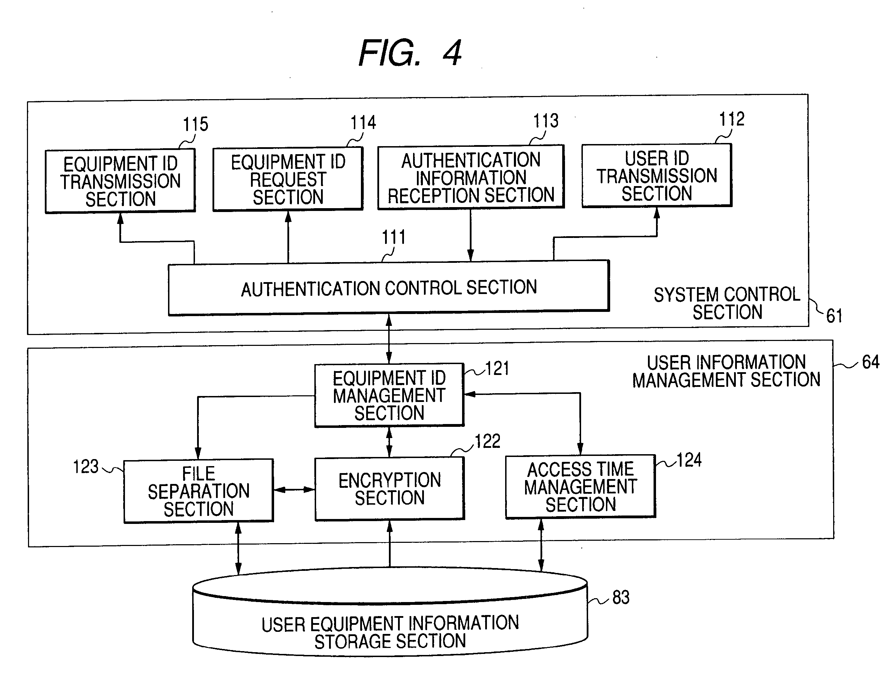

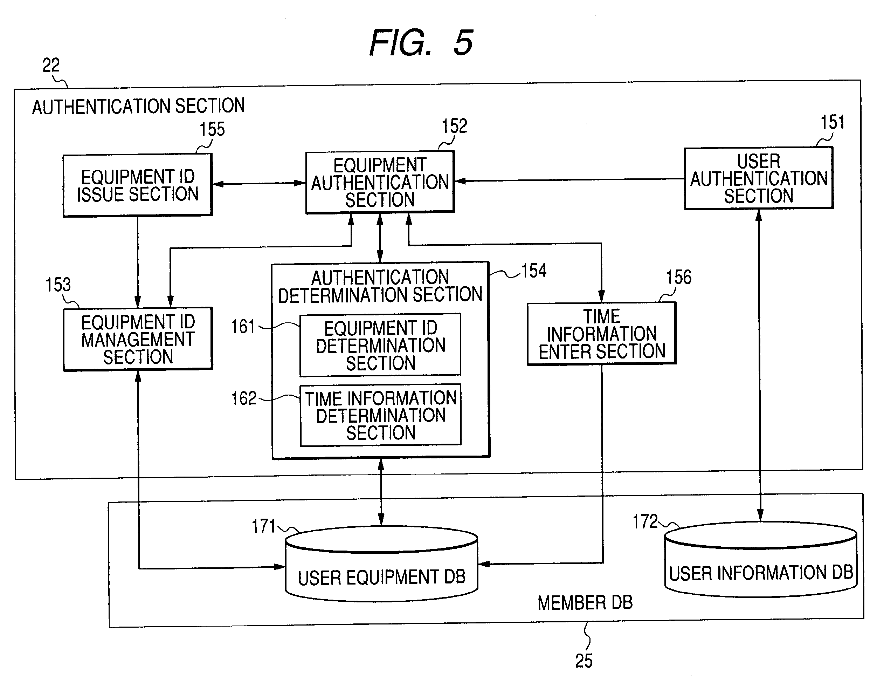

In an information processing system according to an embodiment of the invention, a first information processing device (e.g., a license server 4 of FIG. 1) includes: user ID authentication means (e.g., a user authentication section 151 of FIG. 5) for authenticating information of a user ID (identification) coming from a second information processing device for user identification, and transmitting to the second information processing device a user authentication certification for the user ID; first equipment ID determination means (e.g., an equipment ID management section 153 of FIG. 5) for determining whether there is information of an equipment ID corresponding to the user ID authenticated by the user ID authentication means for identifying the second information processing device; equipment ID issue means (an equipment ID issue section 155 of FIG. 5) for issuing, when the first equipment ID determination means determines that there is no such equipment ID corresponding to the user ID, the equipment ID corresponding to the user ID with respect to the second information processing device; second equipment ID determination means (e.g., an equipment ID determination section 161 of FIG. 5) for determining, in response when the user ID is authenticated by the user ID authentication means, whether the equipment ID issued to the second information processing device and provided therefrom is the same as the equipment ID for the user ID; and equipment authentication means (e.g., an equipment authentication section 152 of FIG. 5) for authenticating the equipment ID of the second information processing device when the second equipment ID determination means determines that the equipment ID of the second information processing device is the same as the equipment ID for the user ID. The second information processing device (e.g., a user terminal 1₁ of FIG. 1) includes: user ID transmission means (e.g., a user ID transmission section 112 of FIG. 4) for transmitting the user ID to the first information processing device; equipment ID recording means (e.g., a user information management section 64 of FIG. 4) for recording the equipment ID issued by the equipment ID issue means for the user ID and provided by the first information processing device; equipment ID acquisition means (e.g., an authentication control section 111 of FIG. 4) for acquiring, when the user authentication certification coming from the user ID transmission means is received for the user ID, the equipment ID recorded by the equipment ID recording means for the user ID; and equipment ID transmission means (e.g., an equipment ID transmission section 115) for transmitting, when the equipment ID acquisition means acquires the equipment ID for the user ID, the equipment ID corresponding to the user ID to the first information processing device as the equipment ID of the second information processing device.

An information processing device (e.g., the license server 4 of FIG. 1) according to an embodiment of the invention includes: user ID authentication means (e.g., the user authentication section 151 of FIG. 5) for authenticating information of a user ID (identification) coming from the other information processing device (e.g., the user terminal 1₁ of FIG. 1) for user identification, and transmitting a user authentication certification for the user ID; first equipment ID determination means (e.g., the equipment ID management section 153 of FIG. 5) for determining whether there is information of an equipment ID corresponding to the user ID authenticated by the user ID authentication means for identifying the other information processing device; equipment ID issue means (e.g., the equipment ID issue section 155 of FIG. 5) for issuing, when the first equipment ID determination means determines that there is no such equipment ID corresponding to the user ID, the equipment ID corresponding to the user ID with respect to the other information processing device; second equipment ID determination means (e.g., the equipment ID determination section 161 of FIG. 5) for determining, in response when the user ID is authenticated by the user ID authentication means, whether the equipment ID issued to the other information processing device and provided therefrom is the same as the equipment ID for the user ID; and equipment authentication means (e.g., the equipment authentication section 152 of FIG. 5) for authenticating the equipment ID of the other information processing device when the second equipment ID determination means determines that the equipment ID of the other information processing device is the same as the equipment ID for the user ID.

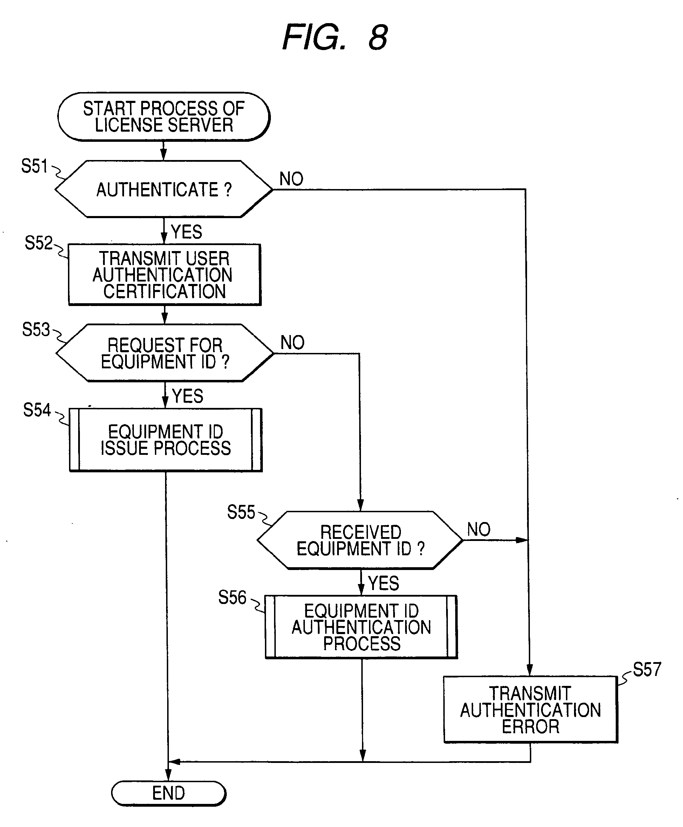

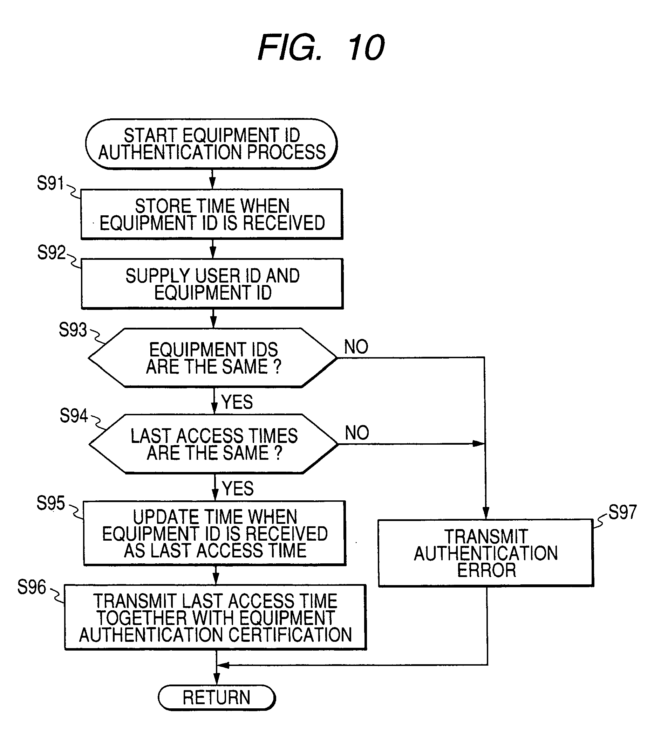

An information processing device according to an embodiment of the invention also includes: time enter means (e.g., a time information enter section 156 of FIG. 5) for entering, when the equipment authentication means authenticates the equipment ID of the other information processing device, a predetermined time as a last access time to correspond to the user ID; time information transmission means (e.g., the equipment authentication section 152 of FIG. 5 executing the process of step S96 of FIG. 10) for transmitting, to the other information processing device, the last access time entered by the time enter means together with the authentication certification for the equipment ID issued by the equipment authentication means; time reception means (e.g., the equipment authentication section 152 of FIG. 5 executing the process of step S55 of FIG. 8) for receiving, from the other information processing device, the equipment ID of the other information processing device and the last access time in response when the user ID is authenticated by the user ID authentication means; and time determination means (e.g., a time information determination section 162 of FIG. 5) for determining, when the second equipment ID determination means determines that the equipment ID of the other information processing device is the same as the equipment ID for the user ID, whether the last access time received by the time reception means is the same as the last access time entered by the time enter means. When the time determination means determines that the last access time received by the time reception means is the same as the last access time entered by the time enter means, the equipment authentication means authenticates the equipment ID of the other information processing device.

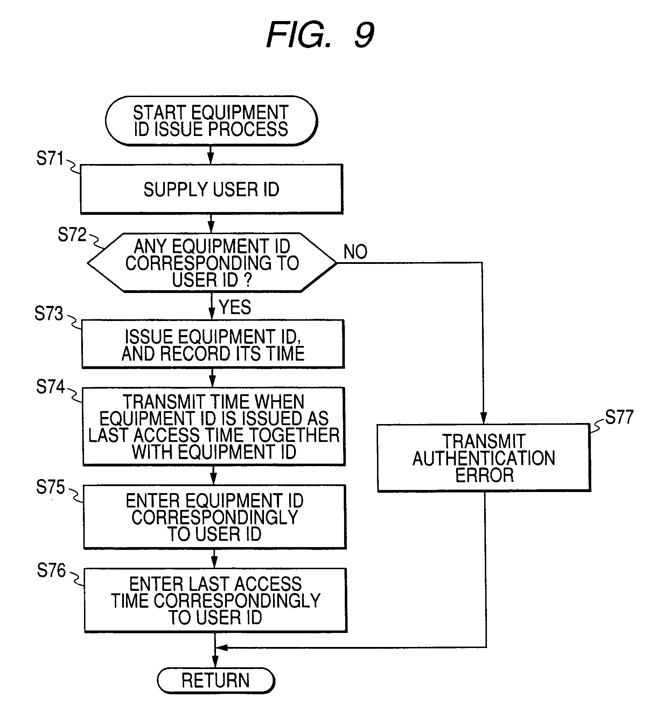

A program according to an embodiment of the invention includes: a user ID authentication step (e.g., step S51 of FIG. 8) of authenticating information of a user ID (identification) coming from an information processing device for user identification, and transmitting a user authentication certification for the user ID; a first equipment ID determination step (e.g., step S72 of FIG. 9) of determining whether there is information of an equipment ID corresponding to the user ID authenticated by the user ID authentication step for identifying the information processing device; an equipment ID issue step (e.g., step S73 of FIG. 9) of issuing, when no such equipment ID corresponding to the user ID is determined as entered by the process of the first equipment ID determination step, the equipment ID corresponding to the user ID with respect to the information processing device; a second equipment ID determination step (e.g., step S93 of FIG. 10) of determining, in response when the user ID is authenticated by the process of the user ID authentication step, whether the equipment ID of the information processing device provided by the information processing device is the same as the equipment ID for the user ID; and an equipment authentication step (e.g., step S96 of FIG. 10) of authenticating the equipment ID of the information processing device when the equipment ID of the information processing device is determined as being the same as the equipment ID for the user ID by the process of the second equipment ID determination step.

An information processing device (e.g., the user terminal 1₁ of FIG. 1) according to an embodiment of the invention includes: user ID transmission means (e.g., the user ID transmission section 112 of FIG. 4) for transmitting information of a user ID (identification) to the other information processing device (e.g., the license server 4 of FIG. 1) for user identification; equipment ID recording means (e.g., the user information management section 64 of FIG. 4) for recording, as an equipment ID corresponding to the user ID, information of an equipment ID provided in response to the user ID authenticated by the other information processing device for identifying the information processing device; equipment ID acquisition means (e.g., the authentication control section 111 of FIG. 4) for acquiring, when a user authentication certification coming from the other information processing device for the user ID provided by the user ID transmission means is received, the equipment ID recorded by the equipment ID recording means for the user ID; and equipment ID transmission means (e.g., the equipment ID transmission section 115 of FIG. 4) for transmitting, when the equipment ID corresponding to the user ID is acquired by the equipment ID acquisition means, the equipment ID corresponding to the user ID to the other information processing device.

In an information processing device according to an embodiment of the invention, when the equipment ID acquisition means does not acquire the equipment ID of the information processing device for the user ID, equipment ID request means (e.g., an equipment ID request section 114 of FIG. 4) is further included to make a request to the other information processing device for the equipment ID corresponding to the user ID.

In an information processing device according to an embodiment of the invention, the equipment ID recording means includes encryption means (e.g., an encryption section 122 of FIG. 4) for encrypting the equipment ID corresponding to the user ID, and records the equipment ID encrypted by the encryption means for the user ID.

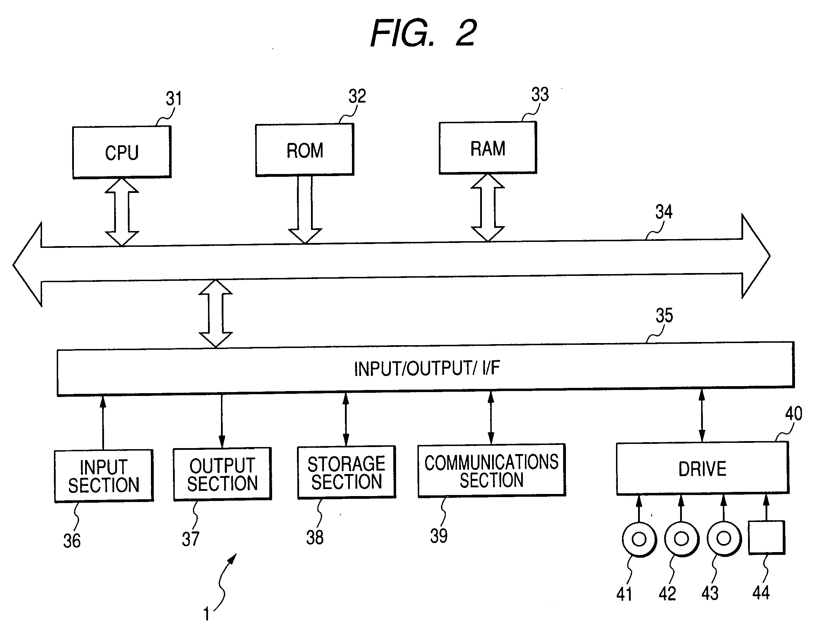

In an information processing device according to an embodiment of the invention, the encryption means encrypts the equipment ID corresponding to the user ID using an encryption key of an ID which uniquely specifies a block (e.g., a CPU 31 of FIG. 2) configuring the information processing device.

In an information processing device according to an embodiment of the invention, the equipment ID recording means includes separation means (e.g., a file separation section 123 of FIG. 4) for separately distributing the equipment ID corresponding to the user ID, and records the resulting equipment IDs separately distributed by the separation means to each different region of a recording medium.

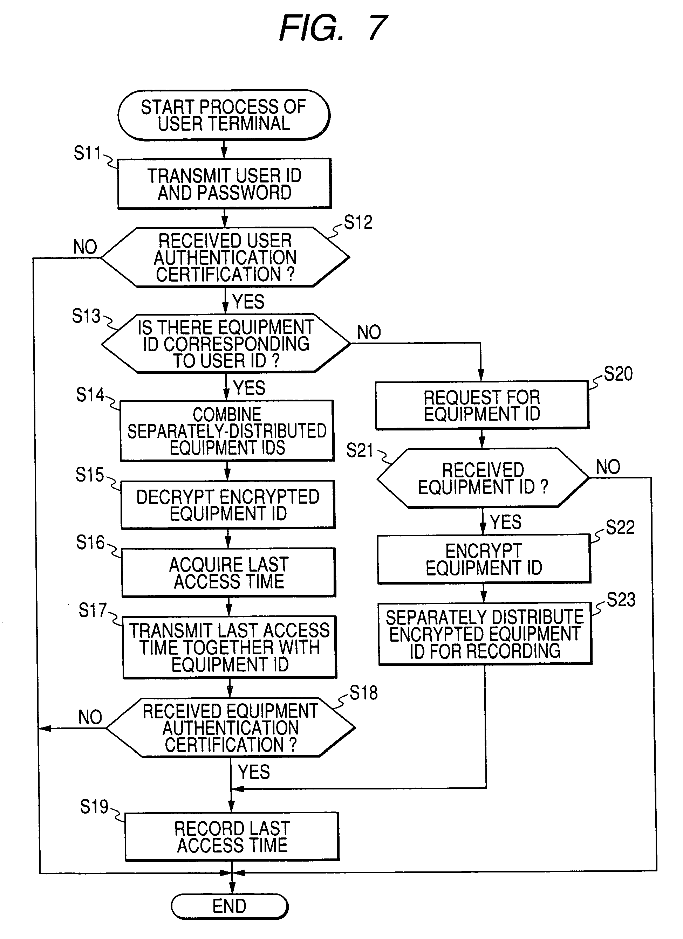

In an information processing device according to an embodiment of the invention, time information reception means (e.g., an authentication information reception section 113 of FIG. 4 executing the process of S18 of FIG. 7) is further included for receiving a predetermined time that is entered as a last access time corresponding to an authentication certification provided by the other information processing device for the equipment ID corresponding to the user ID provided by the equipment ID transmission means, and the user ID when the equipment ID is authenticated by the other information processing device for the user ID. When the equipment ID corresponding to the user ID is acquired by the equipment ID acquisition means, the equipment ID transmission means (e.g., the equipment ID transmission section 115 of FIG. 4 executing the process of S17 of FIG. 7) transmits to the other information processing device also the predetermined time received by the time information reception means in addition to the equipment ID corresponding to the user ID.

A program according to an embodiment of the invention includes: a user ID transmission step (e.g., step S11 of FIG. 7) of transmitting information of a user ID (identification) to an information processing device for user identification; an equipment ID recording step (e.g., step S23 of FIG. 7) of recording, as an equipment ID corresponding to the user ID, information of an equipment ID of the information processing device provided in response to the user ID authenticated by the information processing device for identification; an equipment ID acquisition step (e.g., step S14 of FIG. 7) of acquiring, when a user authentication certification is received for the user ID provided by the process of the user ID transmission step from the information processing device, the equipment ID corresponding to the user ID recorded by the process of the equipment ID recording step; and an equipment ID transmission step (e.g., step S17 of FIG. 7) of transmitting, when the equipment ID corresponding to the user ID is acquired by the process of the equipment ID acquisition step, the equipment ID corresponding to the user ID to the information processing device.

In the below, an embodiment of the invention is described by referring to the accompanying drawings.

FIG. 1 shows an exemplary configuration of a content system to which the invention is applied.

A network 2 typically exemplified by the Internet is connected with user terminals 1₁ to 1₃ configured by PCs, for example. Although FIG. 1 example shows only three user terminals 1, any arbitrary number of user terminals 1 may be connected to the network 2. In the below, when there is no specific need to make a distinction among the user terminals 1₁ to 1₃, those are simply referred to as the user terminal 1.

The network 2 is also connected with any arbitrary number of content server 3 and license server 4. The content server 3 serves to provide dynamic contents, music contents, and others, to the user terminal 1, and the license server 4 serves to manage licenses (right information) of contents provided by the content server 3, and users using services offered by the content system.

That is, the content system of FIG. 1 offers services of license acquisition for viewing the contents of the content server 3. Although no description is given, the content system of FIG. 1 applies an encryption scheme of SSL (Secure Socket Layer), for example, for content transmission and reception between the license server 4 and the user terminal 1.

The user terminal 1 uses client software such as Web browser to display a log-in (authentication) screen for utilizing the services of the content system from a Web server 21 of the license server 4. Based on the user operation, the user terminal 1 asks an authentication section 22 for user authentication. Once authenticated by the authentication section 22, the user terminal 1 is allowed to use services of content license (right information) acquisition or others offered by the content system. Here, such services are accessible until a command is issued to service termination (log out).

More specifically, while the authentication made by the authentication section 22 is valid, the user terminal 1 requests viewing of a specific content in the content server 3 to a billing management section 23. The user terminal 1 then forwards billing information to the billing management section 23, and license information is correspondingly issued thereto by a license management section 24. Using a license key included in the license information acquired while the authentication made by the authentication section 22 is valid, the user terminal 1 is authorized to decode and reproduce the content acquired from the content server 3.

The content server 3 includes content storage sections 11₁ to 11₃ for storing dynamic contents, music contents, and others. In the below, when there is no specific need to make a distinction thereamong, those are simply referred to as the content storage section 11. The contents stored in the content storage section 11 are often those requiring copyright protection, and thus are encrypted. The content server 3 provides those encrypted contents to the user terminal 1 over the network 2.

The license server 4 is configured to include the Web server 21, the authentication section 22, the billing management section 23, the license management section 24, a member database (DB) 25, and a content license database (DB) 26. Herein, these components of the license server 4 are all configured as functional blocks to be implemented by execution of a predetermined program. This is not restrictive, and the hardware structure will also do. A CPU (Central Processing Unit) of the license server 4, which will be described later, is in charge of the program execution.

The Web server 21 is storing information such as HTML (HyperText Markup Language) texts, images, and others for use of the content system. In response to a request from the user terminal 1, the Web server 21 provides the user terminal 1 with such information, i.e., screen data for the Web browser. When an authentication request comes from the user terminal 1, the authentication section 22 accordingly goes through an authentication process for the user and the user terminal 1 based on the user information found in the member DB 25. If the user terminal 1 is authenticated, the authentication section 22 then authorizes the user terminal 1 to use the content system, i.e., content license acquisition.

When the user terminal 1 authenticated by the authentication section 22 asks for viewing of a content in the content server 3, the billing management section 23 goes through a billing process for the content viewing so as to acquire billing information from the user terminal 1. Based on the billing information of the user terminal 1 acquired by the billing management section 23, the license management section 24 issues a license for the content viewing. Information about thus issued license is forwarded to the user terminal 1, and is also entered into the content license DB 26. The license information also includes a license key for decrypting the encrypted content.

The member DB 25 carries user information for the respective users using the content system. The user information includes a user ID (identification) for user identification (distinction), a password, an equipment ID corresponding to the user ID, user personal information (name, address, schedule, credit card number), and others. Herein, the equipment ID is provided for identifying the user's user terminal 1.

The content license DB 26 includes content license information, e.g., target user ID, target content, a license key to decrypt the encrypted target content, license expiration date, and others.

Although the details are left for later description, in the content system, user authentication is performed to see who is using the user terminal 1 by referring to the user ID and password coming from the user terminal 1 for user identification. The user terminal 1 is then authenticated by referring to the equipment ID provided correspondingly to the user ID for identifying the user's user terminal 1. After the user terminal 1 is authenticated as such, the content system becomes available for use.

In more detail, the content system of FIG. 1 takes charge not only of the user ID but also of equipment ID of the user's user terminal 1 in a correlated manner, and issues a certification for content use only after the user ID and the equipment ID are both authenticated. Such a configuration prevents a plurality of user terminals from enjoying the services under one specific user ID.

In FIG. 1 example, the content server 3 and the license server 4 are separately provided. This is not restrictive, and the content server 3 and the license server 4 may be provided as a piece, or the components configuring the license server 4, i.e., the authentication section 22, the billing management section 23, the license management section 24, and the Web server 21 may be configured by each different server. That is, FIG. 1 configuration is not the only option for the server configuration.

The user terminal 1 can be surely configured by a PC, and other than this, a mobile phone and any other PDA (Personal Digital Assistant) equipment, CE (Consumer Electronics) equipment including AV (Audio Visual) equipment, a household electrical appliance, and others are also possibilities.

FIG. 2 shows an exemplary hardware configuration of the user terminal 1. In FIG. 2, the user terminal 1 is configured basically by a computer.

A CPU 31 goes through various processes in accordance with programs stored in ROM (Read Only Memory) 32, and programs loaded into RAM (Random Access Memory) 33 from a storage section 38. The RAM 33 also stores any data, as appropriate, needed for the CPU 31 to execute various processes.

A connection is established among the CPU 31, the ROM 32, and the RAM 33 over a bus 34. The bus 34 is connected with an input/output interface (I/F) 35.

The input/output I/F 35 is connected with an input section 36, an output section 37, the storage section 38, and a communications section 39. The input section 36 includes a keyboard, a mouse, and others, and the output section 37 includes a display exemplified by a CRT (Cathode Ray Tube) or an LCD (Liquid Crystal Display), a speaker, and others. The storage section 38 is configured by a hard disk or others, and the communications section 39 is configured by a modem, a terminal adapter, and others. The communications section 39 goes through a communications process over the network 2.

If required, the input/output I/F 35 is connected with a drive 40, and is equipped with a magnetic disk 41, an optical disk 42, a magneto-optical disk 43, or semiconductor memory 44 as appropriate. The storage section 38 installs computer programs read therefrom in case of necessity.

Although not shown, the content server 3 and the license server 4 are also configured by a computer, the configuration of which is basically the same as the user terminal 1 shown in FIG. 2. Accordingly, in the below, the configuration of FIG. 2 is also referred to as the configuration of the content server 3 or the license server 4.

By the CPU 31 executing various programs, the computer of FIG. 2 serves as the user terminal 1, the content server 3, or the license server 4 of FIG. 1. With this being the case, the programs are to be stored in advance in the ROM 32 or the storage section 38, both serving as a recording medium provided inside of the computer of FIG. 2. Alternatively, the programs may be temporarily or permanently stored in (recorded on) any types of removable recording medium, e.g., the magnetic disk 41, the optical disk 42, the magneto-optical disk 43, or the semiconductor memory 44, for provision as so-called package software.

Note here that instead of being installed from such a removable recording medium to the computer of FIG. 2, the programs may be installed in other manners, e.g., wireless transfer from a download site to the computer of FIG. 2 via artificial satellites for digital satellite broadcasting, or cable transfer to the computer of FIG. 2 over a LAN (Local Area Network) or the network 2.

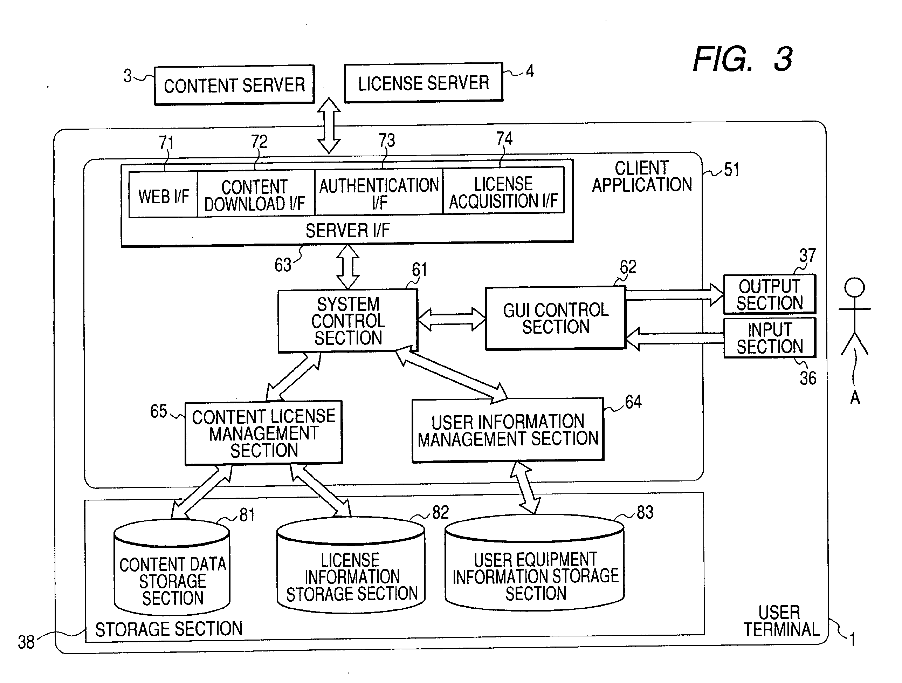

FIG. 3 is a block diagram showing an exemplary function configuration of the user terminal 1. The functional block of FIG. 3 is implemented by the CPU 31 of the user terminal 1 executing a client application 51.

In more detail, in FIG. 3 example, a user A uses a mouse configuring the input section 36 to activate the client application 51 exemplarily configured by a Web browser. The CPU 31 receives such a command to activate the client application 51 via the input section 36, and accordingly runs the client application. As such, the client application 51 implements the functional blocks including a system control section 61, a GUI (Graphical User Interface) control section 62, a server interface (I/F) 63, a user information management section 64, a content license management section 65, and others.

In FIG. 3 example, the storage section 38 is configured to include a content data storage section 81, a license information storage section 82, and a user equipment information storage section 83.

For execution of various processes, the system control section 61 exercises control over the components of the GUI control section 62, the server I/F 63, the user information management section 64, and the content license management section 65. Such control application is in response to the user A's operation transferred from the GUI control section 62, or the information and data from the content server 3 or the license server 4 provided by the server I/F 63. The GUI control section 62 receives the user A's operation via the input section 36, and provides the system control section 61 with an operation signal corresponding to the operation. Under the control of the system control section 61, the GUI control section 62 exercises control over a monitor configuring the output section 37 to display videos. Here, the videos include those corresponding to content data, which is stored in the content data storage section 81 and provided by the content license management section 65, or those corresponding to screen data provided by the Web server 21 of the license server 4 over the server I/F 63.

The server I/F 63 is configured to include a Web interface (I/F) 71, a content download interface (I/F) 72, an authentication interface (I/F) 73, and a license acquisition interface (I/F) 74. The server I/F 63 receives information from the content server 3 or the license server 4 over the network 2. The server I/F 63 supplies thus received information to the system control section 61, or in accordance with the control exercised by the system control section 61, forwards various types of data to the content server 3 or the license server 4 over the network 2.

Under the control of the system control section 61, the Web I/F 71 communicates with the Web server 21 of the license server 4. That is, the Web I/F 71 is in charge of request (information) transmission to the Web server 21, or screen data reception for supply to the GUI control section 62 via the system control section 61. Here, the request is the one provided by the GUI control section 62, and the screen data is the one provided by the Web server 21.

The content download I/F 72 communicates with the content server 3 under the control of the system control section 61. That is, the content download I/F 72 is in charge of request transmission to the content server 3, and reception of content data from the content server 3. Here, the request is the one made for the contents in the GUI control section 62, and the content data is provided to the content license management section 65 via the system control section 61.

The authentication I/F 73 communicates with the authentication section 22 of the license server 4 under the control of the system control section 61. That is, the authentication I/F 73 is in charge of information transmission to the authentication section 22, and reception of authentication result or request for transmission to the user information management section 64 via the system control section 61. Here, the information for transmission is the one provided by the GUI control section 62 or the user information management section 64, and the authentication result or request is the one derived by the authentication section 22.

The license acquisition I/F 74 communicates with the billing management section 23 and the license management section 24 of the license server 4 under the control of the system control section 61. That is, the license acquisition I/F 74 forwards, to the billing management section 23, a license acquisition request or billing information coming from the GUI control section 62. The license acquisition I/F 74 also serves to supply a request of billing information from the billing management section 23 to the GUI control section 62 via the system control section 61, or receives the license information for supply to the content license management section 65 via the system control section 61. Here, the license information is the one coming from the license management section 24 as a result of the billing process executed by the billing management section 23.

The user information management section 64 keeps track of information recorded in the user equipment information storage section 83 under the control of the system control section 61. That is, the user information management section 64 is in charge of information recording to the user equipment information storage section 83, or information reading from the user equipment information storage section 83.

The content license management section 65 takes charge of the content data storage section 81 and the license information storage section 82 under the control of the system control section 61. That is, the content license management section 65 stores, into the content data storage section 81, any content coming from the content download I/F 72 as a content data file. When a request comes from the GUI control section 62 for content reproduction, the content license management section 65 reads a predetermined content data file from the content data storage section 81, and from the license information storage section 82, reads also a license key found in license information corresponding to thus read content data file. Thus read content data file and the license key are provided to the system control section 61.

The content data storage section 81 stores encrypted content data files of moving images, still images, music, and others, provided by the content server 3. These content data files are decrypted by a license key included in any corresponding license information.

As a result of the billing process executed by the billing management section 23 of the license server 4, the license information storage section 82 stores license information that is issued for every content by the license management section 24. The license information also includes a license key to decrypt the encrypted content data files.

The user equipment information storage section 83 stores user's personal information, equipment information unique to the user terminal 1, equipment ID information of the user terminal 1, and others. The user's personal information includes the user A's name, mail address, address, and others. The user's personal information may include the user's user ID and password.

The equipment information unique to the user terminal 1 includes information for identifying a predetermined block configuring the user terminal 1. For example, the equipment information includes a CPU ID that is assigned to the CPU 31 at the time of shipment for identification thereof, a recording medium ID assigned to the storage section 38 for identification thereof, or an MAC address of a network interface configuring the communications section 39. If the user terminal 1 is USB (Universal Serial Bus)-connected to external ROM, the ID of the ROM is also stored as the equipment information unique to the user terminal 1.

The equipment ID information of the user terminal 1 denotes an equipment ID issued by the license server 4 corresponding to the user A's user ID for identifying which user terminal 1 in the content system is used by the user *A.* The user information management section 64 keeps track of the equipment ID correspondingly to the user *A*'s user ID. If a user *B* uses the content system using the same user terminal 1 with different timing, there is provided another equipment ID corresponding to the user *B'*s user ID. The user information management section 64 thus keeps track of the equipment ID in a correlated manner to the user *B*'s user ID.

That is, in a case where the user terminal 1 is used by a plurality of users, a plurality of equipment IDs are assigned to the user terminal 1. However, a one-to-one relationship is established between the equipment ID and the user A's user ID, and between the equipment ID and the user *B*'s user ID.

FIG. 4 shows in detail an exemplary function configuration of the system control section 61 and the user information management section 64 of FIG. 3, both of which are in charge of an authentication process with the license server 4.

In FIG. 4 example, the system control section 61 is configured to include an authentication control section 111, a user ID transmission section 112, an authentication information reception section 113, an equipment ID request section 114, and an equipment ID transmission section 115.

The authentication control section 111 goes through an authentication process with the license server 4 by exercising control over the components of the user ID transmission section 112, the equipment ID request section 114, and the equipment ID transmission section 115. This is based on an operation signal provided via the input section 36 corresponding to the user A's operation, information provided by the license server 4 for reception by the authentication information reception section 113 and, or information provided by the user information management section 64.

Under the control of the authentication control section 111, the user ID transmission section 112 forwards, to the license server 4 over the network 2, the user ID and the password provided via the input section 36. The authentication information reception section 113 receives information such as the authentication result from the license server 4 over the network 2, and supplies thus received information to the authentication control section 111. When authenticating the equipment ID provided by the equipment ID transmission section 115, the license server 4 forwards the time when the equipment ID is received by the license server 4 as a last access time. This last access time is forwarded together with an authentication certification. Upon reception of the last access time, the authentication information reception section 113 forwards it to the authentication control section 111.

Under the control of the authentication control section 111, the equipment ID request section 114 forwards a request for the equipment ID corresponding to the user ID. This request transmission is made toward the license server 4 over the network 2. Under the control of the equipment ID transmission section 111, the equipment ID transmission section 115 forwards the equipment ID provided by the equipment ID management section 121 over the network 2.

The user information management section 64 is configured to include an equipment ID management section 121, an encryption section 122, a file separation section 123, and an access time management section 124.

The equipment ID management section 121 keeps track of the equipment ID and the last access time correspondingly to the user ID. The equipment ID management section 121 exercises control over the encryption section 122, the file separation section 123, and the access time management section 124. The equipment ID management section 121 records (stores) the equipment ID and the last access time coming from the authentication control section 111 onto (into) a predetermined region of the user equipment information storage section 83, or reads the equipment ID and the last access time requested by the authentication control section 111 from the user equipment information storage section 83. Thus read equipment ID and last access time are forwarded to the authentication control section 111. In FIG. 4 example, the management information including the equipment ID and the last access time is presumed to be stored in the equipment ID management section 121. This is not restrictive, and the management information may be stored in the user equipment information storage section 83.

Under the control of the equipment ID management section 121, the encryption section 122 encrypts the equipment ID provided by the equipment ID management section 121. For encryption, the equipment information stored in the user equipment information storage section 83 being unique to the user terminal 1, e.g., CPU ID or MAC address, is used as an encryption key. The resulting encrypted equipment ID is forwarded to the file separation section 123. When the encrypted equipment ID comes from the file separation section 123, the encryption section 122 decrypts the encrypted equipment ID under the control of the equipment ID management section 121. Thus decrypted equipment ID is then forwarded to the equipment ID management section 121.

Under the control of the equipment ID management section 121, the file separation section 123 distributes the equipment ID as a result of encryption by the encryption section 122 into a plurality of files. Thus separated equipment IDs are recorded onto each different predetermined region in the user equipment information storage section 83. This is aimed to prevent user's detection. To be more specific, assuming that the equipment ID is separately distributed to two files, the file separation section 123 records one file as a file, and records the remaining file into a registry or others. Under the control of the equipment ID management section 121, the file separation section 123 reads the plurally-distributed equipment IDs from the user equipment information storage section 83. Thus read equipment IDs are collectively put into a single file for provision to the encryption section 122.

Under the control of the equipment ID management section 121, the access time management section 124 records, onto the user equipment information storage section 83, the last access time provided by the equipment ID management section 121. The last access time is updated every time a new one comes. Under the control of the equipment ID management section 121, the access time management section 124 reads thus updated last access time for provision to the equipment ID management section 121.

FIG. 5 is a diagram showing in detail an exemplary configuration of the authentication section 22 and the member DB 25 of the license server 4 of FIG. 1.

In FIG. 5 example, the authentication section 22 is configured to include a user authentication section 151, an equipment authentication section 152, an equipment ID management section 153, an authentication determination section 154, an equipment ID issue section 155, and a time information enter section 156.

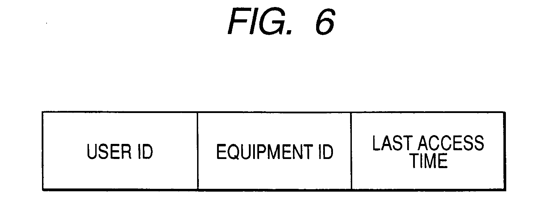

As shown in FIG. 6, the member DB 25 is configured to include a user equipment database (DB) 171, and a user information database (DB) 172 storing a password corresponding to a user ID. The user equipment DB 171 stores a user ID, an equipment ID corresponding to the user ID, the last access time, and others. Here, the last access time represents a predetermined time for the duration when the user of the user ID accesses the license server for the last time. In FIG. 5 example, the last access time is when the equipment ID corresponding to the user ID is received.

The user authentication section 151 refers to the user information DB 172 to go through an authentication process to the user ID and the password coming from the user terminal 1. The authentication result is then forwarded to the user terminal 1 via the communications section 39. The user authentication section 151 provides the equipment authentication section 152 with the authentication result about the user ID.

The equipment authentication section 152 exercises control over the equipment ID management section 153 and the equipment ID issue section 155 to go through an equipment ID authentication process for the first time, i.e., an equipment ID issue process. Such control application is based on a request coming from the user terminal 1 for an equipment ID, or the authentication result from the user authentication section 151 for the user ID. The equipment authentication section 152 also exercises control over the authentication determination section 154 based on the equipment ID and the last access time provided by the user terminal 1 to go through the equipment ID authentication process for the second time or later.

When receiving the equipment ID from the user terminal 1, the equipment authentication section 152 also controls the time information enter section 156 to temporarily store the time of receiving the equipment ID. When authenticating the equipment ID from the user terminal 1, the equipment authentication section 152 forwards the time temporarily stored in the time information enter section 156 to the user terminal 1 as the last access time together with the authentication result. At this time, the equipment authentication section 152 controls the time information enter section 156 to overwrite, for update, the last access time in the user equipment DB 171 with the temporarily-stored time. The equipment authentication section 152 controls the time information enter section 156 to forward the time when the user ID is issued to the user terminal 1 as the last access time. The last access time is also entered into the user equipment DB 171.

The equipment ID management section 153 makes a determination whether the user equipment DB 171 carries the equipment ID corresponding to the user ID coming from the equipment authentication section 152. The determination result is provided to the equipment authentication section 152. Under the control of the equipment authentication section 152, the equipment ID management section 153 establishes a correlation between the user ID and the equipment ID issued by the equipment ID issue section 155. The result is then entered into the user equipment DB 171.

The authentication determination section 154 is configured to include an equipment ID determination section 161, and a time information determination section 162. When the user ID and the equipment ID are provided by the equipment authentication section 152, the equipment ID determination section 161 acquires the equipment ID corresponding to the user ID from the user equipment DB 171. The equipment ID determination section 161 then makes a determination whether thus provided equipment ID is the same as the equipment ID acquired by the user equipment DB 171. The determination result is then provided to the equipment authentication section 152.

The time information determination section 162 acquires, from the user equipment DB 171, the last access time corresponding to the user ID (equipment ID) provided by the equipment authentication section 152. The last access time from the equipment authentication section 152 is then checked to see whether it is the same as the last access time acquired from the user equipment ID DB 171. The determination result is then forwarded to the equipment authentication section 152.

The equipment ID issue section 155 issues an equipment ID corresponding to the user ID under the control of the equipment authentication section 152.

Under the control of the equipment authentication section 152, the time information enter section 156 temporarily stores a predetermined time based on an internal clock (not shown). Here, the predetermined time includes the time when an equipment ID comes from the user terminal 1, the time when the equipment ID is issued, or the time when the equipment ID is authenticated, for example. The last access time stored in the user equipment DB 171 for the user ID is overwritten with the temporarily-stored time for update. The updated last access time is provided to the equipment authentication section 152. Note here that the above-described predetermined time is not the only option, and any other time will do as long as the time is in the duration when the user terminal 1 is making an access to the license server 4, i.e., until the authentication result is forwarded to the user terminal 1 after the access.

Referring to the flowchart of FIG. 7, described next is the process of the user terminal 1.

As an example, the user A operates the mouse or others in the input section 36 so as to activate the client application 51 such as Web browser. The input section 36 supplies an operation signal corresponding to the user operation to the CPU 31. In response to the operation signal coming from the input section 36, the CPU 31 activates the client application 51 of FIG. 3.

To use the content system, the user operates the mouse or others in the input section 36 to issue an access command to the Web server 21 of the license server 4. The system control section 61 controls the Web I/F 71 in response to an operation signal to make it access to the Web server 21 of the license server 4. The operation signal is the one corresponding to the user operation made through the input section 36 via the GUI control section 62.

In response, from the Web server 21 of the license server 4, log-in (authentication) screen data comes for the use of the content system. After receiving the log-in screen data, the Web I/F 71 provides the received log-in screen data to the GUI control section 62 via the system control section 61. The GUI control section 62 displays, on a monitor configuring the output section 37, a video corresponding to the log-in screen data provided by the Web I/F 71. As such, the monitor displays the log-in screen.

While looking at the log-in screen displayed on the monitor, the user operates the keyboard or others of the input section 36 to input his or her user ID and password. In step S11, the authentication control section 111 of the system control section 61 controls the user ID transmission section 112 to forward the user ID and the password provided by the input section 36 to the license server 4 over the network 2.

That is, in step S11, the user ID transmission section 112 forwards the user ID and the password coming from the authentication control section 111 to the license server 4 through the authentication I/F 73, and the procedure goes to step S12. At this time, alternatively, if the user equipment information storage section 83 carries the user ID and the password, the user ID and the password read by the user information management section 64 may be forwarded to the license server 4.

The license server 4 uses the user ID and the password from the user ID transmission section 112 to go through the user authentication process. When the user ID is authenticated, in step S52 of FIG. 8 that will be described later, a user authentication certification is provided to the user terminal 1.

After receiving the user authentication certification for the user ID from the license server 4, the authentication information reception section 113 forwards the user authentication certification to the authentication control section 111. In step S12, the authentication control section 111 makes a determination whether the user authentication certification is received by the authentication information reception section 113. If determined that the user authentication certification is received, the procedure goes to step S13. In step S13, the equipment ID management section 121 is so controlled as to make a determination whether it is carrying an equipment ID corresponding to the user ID.

In step S13, the equipment ID management section 121 determines whether the user equipment information storage section 83 carries an equipment ID corresponding to the user ID, i.e., whether keeping track of the equipment ID corresponding to the user ID. If it is determined that there is such an equipment ID corresponding to the user ID, the procedure goes to step S14. In step S14, the file separation section 123 is so controlled to read the equipment ID from the user equipment information storage section 83, and to put thus read equipment ID into a single file. The procedure then goes to step S15, and the encryption section 122 is so controlled as to decrypt the encryption of the equipment ID. The procedure then goes to step S16.

In more detail, the equipment ID is encrypted using the equipment information unique to the user terminal 1 as an encryption key. Thus encrypted equipment ID is separately distributed to a plurality of files for storage in the user equipment information storage section 83. This process is of steps S22 and S23, which will be described later. In step S14, the file separation section 123 reads the equipment IDs separately distributed to a plurality of files from a plurality of predetermined regions, and the files are merged into a single file. Thus merged equipment ID is then provided to the encryption section 122, and the procedure goes to step S15. In step S15, the encryption section 122 decrypts the encryption of the equipment ID provided by the file separation section 123 using the equipment information unique to the user terminal 1 as an encryption key. Thus decrypted equipment ID is then provided to the authentication control section 111 through the equipment ID management section 121. The procedure then goes to step S16.

In step S16, the equipment ID management section 121 controls the access time management section 124 to make it acquire the last access time from the user equipment information storage section 83. Here, the last access time is the one recorded in step S19 that will be described later for the equipment ID corresponding to the user ID. Thus acquired last access time is then provided to the authentication control section 111, and the procedure then goes to step S17.

In step S17, after acquiring the equipment ID and the last access time from the equipment ID management section 121 for the user ID, the authentication control section 111 controls the equipment ID transmission section 115 to make it transmit the equipment ID and the last access time corresponding to the acquired user ID to the license server 4. That is, in step S17, the equipment ID transmission section 115 forwards, to the license server 4 over the authentication I/F 73, the equipment ID and the last access time corresponding to the user ID provided by the authentication control section 111. The procedure then goes to step S18.

The license server 4 uses the equipment ID corresponding to the user ID from the equipment ID transmission section 115 to go through the equipment authentication process. When the equipment ID is authenticated, in step S96 of FIG. 10 that will be described later, the license server 4 transmits the last access time to the user terminal 1 together with the equipment authentication certification.

After receiving the equipment authentication certification for the equipment ID from the license server 4, the authentication information reception section 113 provides the equipment authentication certification and the last access time to the authentication control section 111. In response, in step S18, the authentication control section 111 makes a determination whether the equipment authentication certification is received by the authentication information reception section 113. If it is determined that the equipment authentication certification is received, the last access time coming together with the equipment authentication certification is provided to the equipment ID management section 121. The procedure then goes to step S19.

In step S19, the equipment ID management section 121 controls the access time management section 124 to make it overwrite, for update, the last access time corresponding to the user ID in the user equipment information storage section 83 with the last access time provided by the authentication control section 111. This is the end of the authentication process.

In the above-described manner, the content system becomes available for use, and the processes of content license acquisition or others are to be executed. Note here that, once allowed, the content system remains available until the user logs off the system, or until a determination is made that the user has made no access for a predetermined length of time.

On the other hand, when it is determined that there is no such equipment ID corresponding to the user ID in step S13, the equipment ID management section 121 provides the determination result to the authentication control section 111, and the procedure goes to step S20. In step S20, the authentication control section 111 controls the equipment ID request section 114 to ask the license server 4 for an equipment ID corresponding to the user ID. That is, in step S20, the equipment ID request section 114 forwards a request of the equipment ID corresponding to the user ID to the license server 4 over the authentication I/F 73. The procedure then goes to step S21.

The license server 4 issues an equipment ID corresponding to the user ID coming from the equipment ID request section 114. In step S74 of FIG. 9 that will be described later, thus issued equipment ID corresponding to the user ID is forwarded to the user terminal 1.

After receiving the equipment ID from the license server 4, the authentication information reception section 113 provides the equipment ID to the authentication control section 111. At this time, the last access time is also received. In step S21, the authentication control section 111 determines whether the equipment ID is received by the authentication information reception section 113. When it is determined that the equipment ID is received, the equipment ID and the last access time are forwarded to the equipment ID management section 121, and the procedure goes to step S22.

In step S22, the equipment ID management section 121 controls the encryption section 122 to encrypt the equipment ID from the authentication control section 111. The procedure then goes to step S23, and the file separation section 123 is so controlled as to separately distribute the equipment ID encrypted by the encryption section 122 into a plurality of files. Thus resulting files are recorded onto a plurality of regions in the user equipment information storage section 83. The procedure then goes to step S19.

That is, in step S22, the encryption section 122 uses the equipment information unique to the user terminal 1 as an encryption key to encrypt the equipment ID supplied from the authentication control section 111. The encrypted equipment ID is provided to the file separation section 123, and the procedure goes to step S23. In step S23, the file separation section 123 separately distributes the equipment ID encrypted by the encryption section 122 to a plurality of files, and the resulting files are recorded onto each different predetermined region in the user equipment information storage section 83.

In step S19, the equipment ID management section 121 so controls the access time management section 124 to make it record the last access time provided together with the equipment ID in a corresponding manner to the user ID in the user equipment information storage section 83. This is the end of the authentication process.

In the above-described manner, in the first authentication process with no equipment ID, the content system becomes available for use. The last access time recorded in step S19 is used in step S16 for the next time, and in step S19 for the next time, the last access time is overwritten with the last access time provided by the license server 4.

On the other hand, when the user ID and the password provided in step S11 are not authenticated by the license server 4, the license server 4 forwards a user authentication error to the user terminal 1 in step S57 of FIG. 8, which will be described later. Similarly, when the equipment ID corresponding to the user ID provided in step S18 is not authenticated by the license server 4, the license server 4 forwards an equipment authentication error to the user terminal 1 in step S97 of FIG. 10, which will be also described later. Moreover, when the request made for the equipment ID corresponding to the user ID transmitted in step S20 is not authenticated by the license server 4, the license server 4 forwards an equipment authentication error to the user terminal 1 in step S77 of FIG. 9, which will be described later.

After receiving the authentication error from the license server 4, the authentication information reception section 113 provides the equipment ID to the authentication control section 111. In response, in step S12, the authentication control section 111 determines that the authentication is failed as the user authentication certification is not received, i.e., the user authentication error is received, and the procedure ends the authentication process. In step S18, the authentication control section 111 determines that the authentication is failed as the equipment authentication certification is not received, i.e., the equipment authentication error is received, and the procedure ends the authentication process. In step S21, the authentication control section 111 determines that the authentication is failed as the equipment ID is not received, i.e., the equipment authentication error is received, and the procedure ends the authentication process. Note here that, alternatively, a message telling the authentication failure may be displayed on the monitor configuring the output section 37.

As described in the foregoing, the user terminal 1 is not allowed to use the content system unless the license server 4 authenticates both the user ID and the equipment ID corresponding thereto. Therefore, this successfully prevents any other user terminals 1 from using the content system by using the user ID for access.

In the user terminal 1, the equipment ID is encrypted with the equipment information unique to the user terminal 1 as an encryption key. The equipment ID is also kept track by being separately distributed into a plurality of files for storage into a plurality of regions. Accordingly, the equipment ID is prevented from reading for use (abuse) with any other terminals 1.

In FIG. 7 example, the equipment ID is first encrypted before distribution to the files. Alternatively, the equipment ID may be first distributed to the files, and the resulting files may be then each encrypted. Still alternatively, the equipment ID may be either distributed to the files or encrypted.

By referring to the flowchart of FIG. 8, described next is the process of the license server 4 corresponding to the process of the user terminal 1 of FIG. 7.

This process is started, in step S11 of FIG. 7, when the user ID and the password coming from the user terminal 1 are received by the user authentication section 151.

After receiving the user ID and the password from the user terminal 1 via the communications section 39, in step S51, the user authentication section 151 refers to the user information DB 172 to make a determination whether or not to authenticate the received user ID and password.

When the user authentication section 151 determines to authenticate the received user ID and password in step S51, the procedure goes to step S52, and the user authentication certification for the user ID is forwarded to the user terminal 1. The procedure then goes to step S53. Note here that the user authentication section 151 forwards the user authentication certification for the user ID also to the equipment authentication section 152.

In response to the user authentication certification provided by the user authentication section 151, the user terminal 1 searches for the equipment ID corresponding to the user ID. When no equipment ID is found, in step S20 of FIG. 7, the user terminal 1 forwards a request for the equipment ID to the license server 4.

In step S53, the equipment authentication section 152 makes a determination whether a request comes from the user terminal 1 for an equipment ID corresponding to the user ID. When it is determined that such a request comes for the equipment ID, the procedure goes to step S54. The equipment ID management section 153 and the equipment ID issue section 155 are then controlled in such a manner as to go through an equipment authentication process for the first time, i.e., an equipment ID issue process. This is the end of the authentication process.

The equipment ID issue process will be described later in detail by referring to the flowchart of FIG. 9. After the equipment ID issue process in step S54, if the user equipment DB 171 already carries the equipment ID corresponding to the user ID, an authentication error is forwarded to the user terminal 1. If the user equipment DB 171 is carrying no such equipment ID corresponding to the user ID, the equipment ID corresponding to the user ID is issued for transmission to the user terminal 1. In this manner, the license server 4 gives an authentication certification to the user terminal 1 for use of the content system.

In response to the user authentication certification from the user authentication section 151, the user terminal 1 searches for an equipment ID corresponding to the user ID. When such an equipment ID is found, in step S17 of FIG. 7, the user terminal 1 forwards thus found equipment ID and the last access time to the license server 4.

In step S53, the equipment authentication section 152 makes a determination whether a request comes from the user terminal 1 for the equipment ID corresponding to the user ID. When it is determined that no request is made for such an equipment ID, the procedure goes to step S55. The equipment authentication section 152 then makes a determination whether the equipment ID corresponding to the user ID is provided by the user terminal 1. If it is determined that the equipment ID corresponding to the user ID is provided by the user terminal 1, the procedure goes to step S56. The authentication determination section 154 is then so controlled as to go through the equipment ID authentication process, i.e., the equipment ID authentication process for the second time or later. This is the end of the authentication process.

The equipment ID authentication process will be described in detail by referring to the flowchart of FIG. 10. After the equipment ID authentication process in step S56, a determination is made whether or not the equipment ID corresponding to the user ID from the user terminal 1 is the same as the equipment ID in the user equipment DB 171 for the user ID. If it is determined that the equipment ID corresponding to the user ID from the user terminal 1 is not the same as the equipment ID in the user equipment DB 171 for the user ID, an authentication error is forwarded to the user terminal 1. If it is determined that the equipment ID corresponding to the user ID from the user terminal 1 is the same as the equipment ID in the user equipment DB 171 for the user ID, the equipment ID is authenticated, and an equipment authentication certification is provided to the user terminal 1. In this manner, the license server 4 gives an authentication certification to the user terminal 1 for use of the content system.

On the other hand, in step S51, if it is determined that the received user ID and password are not authenticated, the procedure goes to step S57. The user authentication section 151 then forwards a user authentication error to the user terminal 1, and this is the end of the authentication process. In step S55, if the user terminal 1 determines that no such equipment ID is received for the user ID, the procedure goes to step S57, and the equipment authentication section 152 forwards an equipment authentication error to the user terminal 1. This is the end of the authentication process.

By referring to the flowchart of FIG. 9, described next in detail is the equipment ID issue process in step S54 of FIG. 8.

In step S71, the equipment authentication section 152 provides the user ID to the equipment ID management section 153, and the procedure goes to step S72. The equipment ID management section 153 is then controlled to determine whether or not the user equipment DB 171 is carrying the equipment ID corresponding to the provided user ID, i.e., the equipment ID is not entered to the user equipment DB 171.

In step S72, when it is determined that the user equipment DB 171 carries no such equipment ID for the user ID, the procedure goes to step S73. The equipment authentication section 152 so controls the equipment ID issue section 155 as to issue an equipment ID for the user ID. Also the time information enter section 156 is so controlled as to store the time when the equipment ID is issued, and the procedure goes to step S74. The time when the equipment ID is issued is forwarded to the user terminal 1 as the last access time together with the issued equipment ID, and the procedure goes to step S75. At this time, the equipment authentication section 152 forwards also an equipment authentication certification.

In step S75, the equipment authentication section 152 provides the issued equipment ID to the equipment ID management section 153. The equipment ID management section 153 is then so controlled as to enter the equipment ID into the user equipment DB 171 in a manner corresponding to the user ID, and the procedure goes to step S76. The time information enter section 156 is then so controlled as to enter the time when the user ID stored in step S73 is issued into the user equipment DB 171 as the last access time in a manner corresponding to the user ID. The procedure then returns to step S54 of FIG. 8 to end the authentication process.

On the other hand, in step S72, when it is determined that the user equipment DB 171 is already carrying the equipment ID corresponding to the user ID, the procedure goes to step S77. The equipment authentication section 152 then forwards an equipment authentication error to the user terminal 1, and the procedure returns to step S54 of FIG. 8 to end the authentication process.

As described above, when the user equipment DB 171 is already carrying the equipment ID corresponding to the user ID, no equipment ID is issued. That is, in the license server 4, the equipment ID has a one-to-one relationship with the user ID.

Therefore, even if the user ID is revealed to any third party, and even if the user ID is used with any other user terminals, the third party having no clue what is the equipment ID is not authenticated by the license server 4. Accordingly, no user ID will be abused.

This favorably prevents leakage of personal information kept track by the license server 4, e.g., credit card number, name, address, and others, and the content license information. What is more, the license information will be revealed only to the user having the user ID, and contents requiring copyright protection is not available for viewing.

By referring to the flowchart of FIG. 10, described next in detail is the equipment ID authentication process in step S56 of FIG. 8. In step S55 of FIG. 8, received are the equipment ID corresponding to the user ID and the last access time, both of which are provided by the user terminal 1.

In step S91 of FIG. 10, the equipment authentication section 152 controls the time information enter section 156 to temporarily store the time when the equipment ID is received from the user terminal 1, and the procedure goes to step S92. In step S92, the user ID and the equipment ID are provided to the equipment ID determination section 161, and the procedure goes to step S93. At this time, the equipment authentication section 152 provides the user ID and the last access time also to the time information determination section 162.

In step S93, the equipment ID determination section 161 acquires, from the user equipment DB 171, the equipment ID corresponding to the user ID provided by the equipment authentication section 152. Thus provided equipment ID is then determined whether or not being the same as the equipment ID acquired from the user equipment DB 171.

If the provided equipment ID is determined as being the same as the equipment ID acquired from the user equipment DB 171 in step S93, in step S94, the equipment authentication section 152 controls the time information determination section 162 to acquire from the user equipment DB 171 the last access time corresponding to the user ID (equipment ID) provided by the equipment authentication section 152. A determination is then made to see whether the last access time provided by the equipment authentication section 152 is the same as the last access time received from the user equipment DB 171. In step S94, if it is determined that the last access time from the equipment authentication section 152 is the same as the last access time received from the user equipment DB 171, the procedure goes to step S95. The equipment authentication section 152 then controls the time information enter section 156 to update the time stored in step S91 as the last access time corresponding to the user ID. Here, the time is when the equipment ID is received from the user terminal 1. The procedure then goes to step S96, and the equipment authentication section 152 makes the user terminal 1 forward the last access time corresponding to the user ID together with the equipment authentication certification. The procedure then returns to step S56 of FIG. 8, and this is the end of the authentication process.

On the other hand, in step S93, when the equipment ID provided by the equipment authentication section 152 is determined as not being the same as the equipment ID acquired from the user equipment DB 171, or in step S94, when the last access time from the equipment authentication section 152 is determined as not being the same as the last access time acquired from the user equipment DB 171, the procedure goes to step S97. The equipment authentication section 152 forwards an equipment authentication error to the user terminal 1. The procedure then returns to step S56 of FIG. 8, and this is the end of the authentication process.

As described above, even if the user ID is authenticated in the license server 4, no authentication certification is given if the equipment ID corresponding to the user ID is wrong. With such a configuration, even if the user ID is revealed to any third party, and even if the user ID is used with any other user terminals, the third party having no clue what is the equipment ID is not authenticated by the license server 4. Accordingly, no user ID will be abused.

What is more, the license server 4 and the user terminal 1 keep track of the same last access time. Therefore, even if the equipment ID is also revealed to the third party, and the third party makes an access with the equipment ID from any other user terminals, the authentication certification is not given because the last access time is wrong.

With the above configuration, content viewing is allowed for the user only by a single user terminal. Therefore, this eases content providers to charge the content copyright on a terminal basis.

Note here that in the above description, the time when the equipment ID is received by the license server 4 is kept track of as the last access time. This is not restrictive, and the time when the equipment ID is authenticated may be kept track on the end of the license server 4 as the last access time.

In the above description, exemplified are the dynamic contents and the music contents. This is not restrictive, and the invention can be applied also to application contents, for example.

The above-described series of processes can be executed by hardware, or by software.

For process execution by the software, a program configuring the software is installed over a network or from a recording medium to computers incorporated in specifically-designed hardware, or general-purpose PCs or others capable of executing various functions with various programs installed thereto, for example.

As shown in FIG. 2, separately from an equipment unit body, this recording medium is configured by a package medium including the magnetic disk 41 (flexible disk included), the optical disk 42 (CD-ROM (Compact Disk-Read Only Memory) and DVD (Digital Versatile Disk) included), the magneto-optical disk 43 (MD (Mini-Disk^{TD}) included), the semiconductor memory 44, or others, those of which are previously storing the programs for distribution to users. Other than those, the ROM 32 previously storing the programs, a hard disk included in the storage section 38, or others, are also provided to the users with the state incorporated in the equipment unit body.

In this specification, the steps in the flowcharts are not necessarily executed in the described order. With this being the case, the steps include processes to be executed simultaneously or separately.

Further, in the specification, the expression of system denotes a system in its entirety including a plurality of equipment units.

It should be understood by those skilled in the art that various modifications, combinations, sub-combinations and alterations may occur depending on design requirements and other factors insofar as they are within the scope of the appended claims or the equivalent thereof.

## Claims

1. An information processing system including a first information processing device, and a second information processing device that communicates with the first information processing device over a network, wherein
the first information processing device comprises:
user ID authentication means for authenticating information of a user ID (identification) coming from the second information processing device for user identification, and transmitting to the second information processing device a user authentication certification for the user ID;
first equipment ID determination means for determining whether there is information of an equipment ID corresponding to the user ID authenticated by the user ID authentication means for identifying the second information processing device;
equipment ID issue means for issuing, when the first equipment ID determination means determines that there is no such equipment ID corresponding to the user ID, the equipment ID corresponding to the user ID with respect to the second information processing device;
second equipment ID determination means for determining, in response when the user ID is authenticated by the user ID authentication means, whether the equipment ID of the second information processing device provided therefrom is the same as the equipment ID for the user ID; and
equipment authentication means for authenticating the equipment ID of the second information processing device when the second equipment ID determination means determines that the equipment ID of the second information processing device is the same as the equipment ID for the user ID, and
the second information processing device comprises:
user ID transmission means for transmitting the user ID to the first information processing device;
equipment ID recording means for recording the equipment ID issued by the equipment ID issue means for the user ID, and provided by the first information processing device;
equipment ID acquisition means for acquiring, when the user authentication certification is received for the user ID provided by the user ID transmission means, the equipment ID recorded by the equipment ID recording means for the user ID; and
equipment ID transmission means for transmitting, when the equipment ID corresponding to the user ID is acquired by the equipment ID acquisition means, the equipment ID corresponding to the user ID to the first information processing device as the equipment ID of the second information processing device.

2. An information processing device for authenticating an other information processing device that is connected over a network, comprising:
user ID authentication means for authenticating information of a user ID (identification) coming from the other information processing device for user identification, and transmitting a user authentication certification for the user ID;
first equipment ID determination means for determining whether there is information of an equipment ID corresponding to the user ID authenticated by the user ID authentication means for identifying the other information processing device;
equipment ID issue means for issuing, when the first equipment ID determination means determines that there is no such equipment ID corresponding to the user ID, the equipment ID corresponding to the user ID with respect to the other information processing device;
second equipment ID determination means for determining, in response when the user ID is authenticated by the user ID authentication means, whether the equipment ID of the other information processing device provided therefrom is the same as the equipment ID for the user ID; and
equipment authentication means for authenticating the equipment ID of the other information processing device when the second equipment ID determination means determines that the equipment ID of the other information processing device is the same as the equipment ID for the user ID.

3. The information processing device according to claim 2, wherein
in response when the user ID is authenticated by the user ID authentication means, when a request comes from the other information processing device for the information of the equipment ID that identifies the other information device, the first equipment ID determination means makes a determination whether there is the equipment ID corresponding to the user ID that is authenticated by the user ID authentication means.

4. The information processing device according to claim 2, further comprising:
time enter means for entering, when the equipment authentication means authenticates the equipment ID of the other information processing device, a predetermined time as a last access time to correspond to the user ID;
time information transmission means for transmitting, to the other information processing device, the last access time entered by the time enter means together with the authentication certification for the equipment ID issued by the equipment authentication means;
time reception means for receiving, from the other information processing device, the equipment ID of the other information processing device and the last access time in response when the user ID is authenticated by the user ID authentication means; and
time determination means for determining, when the second equipment ID determination means determines that the equipment ID of the other information processing device is the same as the equipment ID for the user ID, whether the last access time received by the time reception means is the same as the last access time entered by the time enter means, wherein
when the time determination means determines that the last access time received by the time reception means is the same as the last access time entered by the time enter means, the equipment authentication means authenticates the equipment ID of the other information processing device.

5. A program for use with a computer to execute a process of authenticating an information processing device that is connected over a network, the program comprising:
a user ID authentication step of authenticating information of a user ID (identification) coming from the information processing device for user identification, and transmitting a user authentication certification for the user ID;
a first equipment ID determination step of determining whether there is information of an equipment ID corresponding to the user ID authenticated by the user ID authentication step for identifying the information processing device;
an equipment ID issue step of issuing, when the first equipment ID determination step determines that there is no such equipment ID corresponding to the user ID, the equipment ID corresponding to the user ID with respect to the information processing device;
a second equipment ID determination step of determining, in response when the user ID is authenticated by the user ID authentication step, whether the equipment ID of the information processing device provided therefrom is the same as the equipment ID for the user ID; and
an equipment authentication step of authenticating the equipment ID of the information processing device when the second equipment ID determination step determines that the equipment ID of the information processing device is the same as the equipment ID for the user ID.

6. An information processing device to be authenticated by an other information processing device that is connected over a network, the device comprising:
user ID transmission means for transmitting information of a user ID (identification) to the other information processing device for user identification;
equipment ID recording means for recording, as an equipment ID corresponding to the user ID, information of an equipment ID provided in response when the user ID is authenticated by the other information processing device for identifying the information processing device;
equipment ID acquisition means for acquiring, when a user authentication certification provided by the other information processing device via the user ID transmission means is received for the user ID, the equipment ID corresponding to the user ID recorded by the equipment ID recording means; and
equipment ID transmission means for transmitting, when the equipment ID corresponding to the user ID is acquired by the equipment ID acquisition means, the equipment ID corresponding to the user ID to the other information processing device.

7. The information processing device according to claim 6, further comprising
equipment ID request means for making a request, when the equipment ID of the information processing device corresponding to the user ID is not acquired by the equipment ID acquisition means, of the equipment ID corresponding to the user ID to the other information processing device.

8. The information processing device according to claim 6, wherein
the equipment ID recording means includes encryption means for encrypting the equipment ID corresponding to the user ID, and records the equipment ID encrypted by the encryption means for the user ID.

9. The information processing device according to claim 8, wherein
the encryption means encrypts the equipment ID corresponding to the user ID using an encryption key of an ID uniquely to specify a block configuring the information processing device.

10. The information processing device according to claim 6, wherein
the equipment ID recording means includes separation means for separately distributing the equipment ID corresponding to the user ID, and records the resulting equipment IDs separately distributed by the separation means to each different region of a recording medium.

11. The information processing device according to claim 6, further comprising
time information reception means for receiving a predetermined time that is entered as a last access time corresponding to an authentication certification provided by the other information processing device for the equipment ID corresponding to the user ID provided by the equipment ID transmission means, and the user ID when the equipment ID is authenticated by the other information processing device for the user ID, wherein
when the equipment ID corresponding to the user ID is acquired by the equipment ID acquisition means, the equipment ID transmission means transmits to the other information processing device also the predetermined time received by the time information reception means in addition to the equipment ID corresponding to the user ID.

12. A program for use with a computer to execute a process for an authentication by an information processing device that is connected over a network, the program comprising:
a user ID transmission step of transmitting to the information processing device a user ID (identification) for user identification;
an equipment ID recording step of recording, as an equipment ID corresponding to the user ID, information of an equipment ID of the information processing device provided in response to the user ID authenticated by the information processing device for identification;
an equipment ID acquisition step of acquiring, when a user authentication certification is received for the user ID provided by the user ID transmission step from the information processing device, the equipment ID corresponding to the user ID recorded by the equipment ID recording step; and
an equipment ID transmission step of transmitting, when the equipment ID corresponding to the user ID is acquired by the equipment ID acquisition step, the equipment ID corresponding to the user ID to the information processing device.
